# EUROPÄISCHE PATENTSCHRIFT

(11) **EP 3 423 737 B1**
(45) Veröffentlichungstag und Bekanntmachung des Hinweises auf die Patenterteilung: **21.07.2021**
(21) Anmeldenummer: 16708628.9
(22) Anmeldetag: 29.02.2016
(51) Int. Cl.: F16H 63/28, F16H 63/30

(54) **SCHALTGETRIEBE MIT AKTUATORANORDNUNG, VERFAHREN ZUM STEUERN DES SCHALTGETRIEBES UND ELEKTROANTRIEB MIT SCHALTGETRIEBE**
TRANSMISSION HAVING AN ACTUATOR ASSEMBLY, METHOD FOR CONTROLLING THE TRANSMISSION, AND ELECTRIC DRIVE HAVING A TRANSMISSION
BOÎTE DE VITESSES MANUELLE COMPRENANT UN ENSEMBLE D'ACTIONNEURS, PROCÉDÉ DE COMMANDE DE LA BOÎTE DE VITESSES MANUELLE ET ENTRAÎNEMENT ÉLECTRIQUE COMPRENANT UNE BOÎTE DE VITESSES MANUELLE

(43) Veröffentlichungstag der Anmeldung: 09.01.2019
(73) Patentinhaber: GKN Automotive Limited, Birmingham, West Midlands B37 7YE (GB)
(72) Erfinder: GASSMANN, Theodor, 53721 Siegburg (DE)
(74) Vertreter: Neumann Müller Oberwalleney & Partner Patentanwälte
(86) Internationale Anmeldenummer: PCT/EP2016/054225
(87) Internationale Veröffentlichungsnummer: WO 2017/148501

(56) Entgegenhaltungen:
- EP-A2- 1 464 877
- WO-A1-2014/005698
- DE-A1- 19 917 673

## Beschreibung

Die Erfindung betrifft ein Schaltgetriebe mit einer Aktuatoranordnung für einen Kraftfahrzeugantriebsstrang sowie einen Elektroantrieb mit einem solchen Schaltgetriebe. Schaltgetriebe werden beispielsweise in Elektroantrieben verwendet, um eine elektromotorisch angetriebene Achse des Kraftfahrzeugs mit unterschiedlichen Drehzahlbereichen antreiben zu können. Dabei umfasst ein Schaltgetriebe üblicherweise eine drehend antreibbare Antriebswelle, eine Abtriebswelle und mindestens eine erste Schaltstufe sowie eine zweite Schaltstufe. Durch entsprechende Ausgestaltung von drehmomentübertragenden Gliedern der ersten und zweiten Schaltstufe kann Drehmoment von der Antriebswelle auf die Abtriebswelle mit unterschiedlichen Übersetzungsverhältnissen übertragen werden. Der Elektroantrieb kann als alleiniger Antrieb für das Kraftfahrzeug dienen oder es kann zusätzlich ein Verbrennungsmotor vorgesehen sein. In diesem Fall können der Elektroantrieb und der Verbrennungsmotor jeweils für sich oder gemeinsam überlagert das Kraftfahrzeug antreiben.

Ein Elektroantrieb umfasst üblicherweise eine elektrische Maschine sowie ein nachgelagertes Untersetzungsgetriebe, das eine Drehbewegung vom Schnellen ins Langsame übersetzt. Das Untersetzungsgetriebe kann schaltbar sein und wird dann auch als Schaltgetriebe bezeichnet. Vom Untersetzungsgetriebe wird das Drehmoment auf den Antriebsstrang des Kraftfahrzeugs übertragen, beispielsweise auf ein dem Untersetzungsgetriebe im Drehmomentfluss nachgelagertes Differentialgetriebe. Ein Differentialgetriebe kann ein eingeleitetes Drehmoment auf zwei Ausgangswellen aufteilen, die untereinander eine ausgleichende Wirkung haben.

Aus der WO 2014/005698 A1 ist ein Getriebe mit zwei Übersetzungsstufen und einer Doppelsynchronkupplung mit einer Schaltmuffe bekannt, die in aus einer mittleren Neutralstellung heraus in zwei Gangstufen schaltbar ist. Die Schaltmuffe ist über ein einziges Stellglied betätigbar, das zwei Elektromagneten aufweist, die alternierend elektrisch angesteuert einen auf dem Anker befestigten Magnetkern zum Schalten der Gangstufen I oder II anziehen.

Aus der DE 199 17 673 A1 ist eine Anordnung mit einem ähnlichen Aufbau mit genau einem Aktuator bekannt. Der Aktuator weist zwei Spulen auf, die auf genau einen Anker einwirken, wobei jeweils nur eine Spule aktuiert wird, um den Anker in die jeweils zugehörige Richtung zu ziehen.

Aus der EP 1 271 012 A2 ist eine Gangschaltvorrichtung mit einem Schaltaktuator bekannt. Der Schaltaktuator umfasst einen Betätigungshebel und ein Paar von elektromagnetischen Solenoiden, die aufeinander zu gerichtet sind und zwischen denen der Betätigungshebel angeordnet ist. Es ist vorgesehen, dass entweder der erste Solenoid mit elektrischem Strom beaufschlagt wird, was ein Verschwenken des Betätigungshebels im Gegenuhrzeigersinn bewirkt, oder, dass der zweite Solenoid mit elektrischem Strom beaufschlagt wird, was zu einem Verschwenken des Betätigungshebels im Uhrzeigersinn bewirkt.

Aus der US 2011/0113913 A1 ist ein Gangschaltmechanismus mit einem Schaltfinger bekannt, der mit einer Welle verbunden ist. Die Gangschaltvorrichtung umfasst einen Vorwärtsgang-Elektromagnet, einen Rückwärtsgang-Elektromagnet und ein Schaltblock, der mit der Welle verbunden ist. Wenn der Vorwärtsgang-Elektromagnet angeschaltet ist, ist der Rückwärtsgang-Elektromagnet ausgeschaltet, und umgekehrt.

Aus der DE 10 2005 022 926 B3 ist eine Antriebseinheit für ein Kraftfahrzeug bekannt, mit einem elektrischen Motor, einem Wechselgetriebe mit wenigstens zwei Gangstufen und einem Differential. Der Motor treibt das Differential über eine Zwischenwelle an. Zur Betätigung der zwei Gangstufen ist eine Aktuatoranordnung vorgesehen, die eine drehend antreibbare Schaltwalze aufweist. Mittels der Schaltwalze wird eine Schaltmuffe betätigt, die zwei Schaltkupplungen betätigt.

Aus der WO 2015/149875 A1 ist eine Aktuierungsanordnung für eine Kupplung in einem Schaltgetriebe bekannt. Die Aktuierungsanordnung umfasst einen elektromotorisch angetriebenen Kugelspindeltrieb. Mittels des Kugelspindeltriebs kann die Kupplung wahlweise in drei Schaltstellungen überführt werden, eine erste Schaltstufe, eine zweite Schaltstufe und in eine Neutralstellung.

Aus der WO 2012/007031 A1 ist ein Elektroantrieb für ein Kraftfahrzeug mit einem Elektromotor und einer Getriebeeinheit bekannt. Die Getriebeeinheit umfasst in Reihe eine erste Getriebestufe in Form eines Stirnrad- oder Kettentriebs, eine zweite Getriebestufe in Form eines Planetengetriebes und ein Differentialgetriebe. Ein Sonnenrad des Planetengetriebes kann mittels einer Kupplung wahlweise mit dem Hohlrad drehfest verbunden oder an einem ortsfesten Gehäuseteil drehfest abgestützt oder in Leerlaufstellung überführt werden.

Aus der WO 2012/007030 A1 ist ein Elektroantrieb für ein Kraftfahrzeug bekannt mit einem Elektromotor und einer Getriebeeinheit. Die Getriebeeinheit weist ein Planetengetriebe und ein Differentialgetriebe auf, die koaxial zueinander angeordnet sind. Es ist eine Schaltkupplung vorgesehen, die in drei Schaltpositionen überführt werden kann, und zwar zwei unterschiedliche Schaltstufen sowie eine Leerlaufstellung.

Elektroantriebe mit Schaltgetriebe benötigen einen erheblichen baulichen Aufwand für die Kupplungen und die Aktuatorik. Zudem werden strenge Anforderungen an die Schaltgetriebe beziehungsweise die Aktuatorik bei aufgrund unvorhersehbar Ereignisse eintretenden Fehlfunktionen gestellt, sogenannte "Fail-Safe"-Funktionen.

Der vorliegenden Erfindung liegt die Aufgabe zugrunde, ein Schaltgetriebe mit einer Aktuatoranordnung vorzuschlagen, das einfach und kostengünstig aufgebaut ist, ein zuverlässiges Schalten ermöglicht beziehungsweise auch bei ungewollt eintretenden Fehlfunktionen ein sicheres Schaltverhalten bewirkt. Weiter besteht die Aufgabe darin, einen Elektroantrieb mit einem solchen Schaltgetriebe vorzuschlagen, das einen konstruktiv einfachen Aufbau hat und robuste Schaltfunktionen ermöglicht.

Eine Lösung besteht in einem Schaltgetriebe, insbesondere für einen Antriebsstrang eines Kraftfahrzeugs, umfassend: eine Antriebswelle; eine von der Antriebswelle drehend antreibbare Abtriebswelle; eine erste Schaltstufe; eine zweite Schaltstufe; eine Kupplung, die in drei Kupplungspositionen überführbar ist und ausgestaltet ist, um die Antriebswelle und die Abtriebswelle selektiv über die erste Schaltstufe oder die zweite Schaltstufe miteinander antriebsmäßig zu verbinden oder voneinander zu entkoppeln; eine Aktuierungsanordnung zum Betätigen der Kupplung, wobei die Aktuierungsanordnung ein bewegbares Stellelement aufweist, das in drei Stellpositionen bewegbar ist und mit einem beweglichen Kupplungsteil der Kupplung verbunden ist; wobei die Aktuierungsanordnung einen ersten elektromagnetisch betätigbaren Aktuator und einen zweiten elektromagnetisch betätigbaren Aktuator aufweist, die unabhängig voneinander in individuelle Positionen betätigbar sind und die gemeinsam auf das Stellelement einwirken, derart, dass das Stellelement je nach individueller Position des ersten und zweiten Aktuators von diesen wahlweise in eine der drei Stellpositionen überführbar ist.

Ein Vorteil ist, dass das Schaltgetriebe aufgrund der elektromagnetischen Aktuatoren technisch einfach aufgebaut ist. Mit zwei Aktuatoren lassen sich drei Schaltstellungen des Schaltgetriebes zuverlässig realisieren, wobei auch bei ungewünschten Fehlfunktionen wie Stromausfall die Sicherheit und Funktionsfähigkeit des Antriebsstrangs gewährleistet bleiben. Auf diese Weise kann auf weitere technisch aufwendige Konstruktionselemente für eine Ausfallsicherung ("Fail-Safe"-Funktion) verzichtet werden.

Vorzugsweise sind die elektromagnetisch betätigbaren Aktuatoren so gestaltet, dass sie genau zwei Aktuierungspositionen einnehmen können, nämlich eine erste Aktuierungsposition und eine zweite Aktuierungsposition. Mit diesem einfachen Aufbau der Aktuatoren wären keine Zwischenstellungen zwischen der ersten und zweiten Aktuierungsposition vorgesehen. Bei den beiden Positionen kann es sich beispielsweise um eine ausgefahrene Position und eine eingefahrene Position eines verstellbaren Aktuatorteils handeln, beispielsweise eines bewegbaren Kolbens.

Die Verbindung zwischen dem Stellelement und dem bewegbaren Kupplungsteil kann prinzipiell beliebig ausgestaltet sein, das heißt jede geeignete technische Kopplung beziehungsweise Übertragung der Stellposition des Stellelements auf das bewegbare Kupplungsteil umfassen. Dabei kann die Verbindung unmittelbar oder auch mittelbar über zwischengeschaltete Übertragungsglieder erfolgen. Nach einer möglichen Ausgestaltung ist zwischen dem Stellelement und dem bewegbaren Kupplungsteil ein Übertragungsglied vorgesehen, welches eine Bewegung des Stellelements auf das bewegbare Kupplungsteil überträgt.

Nach einer Ausführungsform kann das Stellelement einen ersten Abschnitt, der mit dem ersten Aktuator wirkverbunden ist, und einen zweiten Abschnitt, der mit dem zweiten Aktuator wirkverbunden ist, aufweisen. Der erste Abschnitt und der zweite Abschnitt sind voneinander beabstandet, wobei eine erste Kraftwirkungslinie des ersten Aktuators und eine zweite Kraftwirkungslinie des zweiten Aktuators durch den jeweils zugehörigen ersten beziehungsweise zweiten Abschnitt verlaufen. Auf diese Weise wirken der erste Aktuator und der zweite Aktuator an unterschiedlichen Abschnitten des Stellelements auf dieses ein, so dass eine Betätigung des ersten Aktuators das Stellelement auf andere Weise bewegt als eine Betätigung des zweiten Aktuators. Durch Überlagerung der Bewegungskomponenten des ersten und zweiten Aktuators kann das Stellelement in drei verschiedene Stellpositionen überführt werden. Nach einer möglichen Konkretisierung können die erste Kraftwirkungslinie und die zweite Kraftwirkungslinie parallel beziehungsweise mit Abstand zueinander angeordnet sein.

Das Stellelement kann insbesondere in Form einer schwenkbaren Wippe gestaltet sein, die um eine Schwenkachse schwenkbar ist. Die Schwenkachse ist vorzugsweise zwischen dem ersten Abschnitt und dem zweiten Abschnitt angeordnet, das heißt, die Kraftwirkungslinien der beiden Aktuatoren liegen auf unterschiedlichen Seiten der Schwenkachse und mit Abstand zu dieser. Vorzugsweise ist das bewegliche Kupplungsteil im Bereich der Schwenkachse mit dem Stellelement wirkverbunden. Durch diese Ausgestaltung beziehungsweise Anordnung lassen sich diverse kinematische Bewegungen des Stellelements realisieren, die nach Bedarf an die konkreten technischen Anforderungen gestaltet werden können.

Nach einer Ausgestaltung weisen der erste und der zweite Aktuator jeweils einen Elektromagneten und einen Kolben auf, wobei der Kolben bei Betätigung des Elektromagneten verschiebbar ist. Die Aktuatoren können beispielsweise von einer elektronischen Regeleinheit (Electronic Control Unit, ECU) angesteuert werden, die zur Regelung der Fahrdynamik des Kraftfahrzeugs dient. Dabei setzen die Aktuatoren elektrische Signale der Regeleinheit in eine mechanische Bewegung eines beweglichen Aktuatorteils um. Auf diese Weise wird die für die Fahrdynamik des Kraftfahrzeugs gewünschte oder erforderliche Schaltposition des Schaltgetriebes eingestellt.

Die Kupplung kann mittels der Aktuatoranordnung wahlweise in eine erste Kupplungsposition überführt werden, in der Drehmoment über die erste Schaltstufe von der Antriebswelle auf die Abtriebswelle übertragen wird, ferner in eine Neutralposition, in der die Antriebswelle und die Abtriebswelle frei gegeneinander drehbar sind; sowie in eine zweite Kupplungsposition, in der Drehmoment über die zweite Schaltstufe von der Antriebswelle auf die Abtriebswelle übertragen wird.

Nach einer ersten Ausführungsform kann zumindest einer von dem ersten und dem zweiten Aktuator in Form eines monostabilen Aktuators gestaltet sein. Hiermit ist im Sinne der vorliegenden Offenbarung insbesondere ein Aktuator gemeint, dessen Kolben bei Bestromung des Elektromagneten in eine erste Richtung kraftbeaufschlagt wird und der in stromlosem Zustand des Elektromagneten kraftfrei ist. Dabei kann nach einer bevorzugten Konkretisierung eine Feder vorgesehen sein, welche den Kolben in eine entgegengesetzte zweite Richtung beaufschlagt, so dass dieser in stromlosen Zustand des Elektromagneten wieder die Ausgangsposition einnimmt.

Nach einer ersten Möglichkeit können der erste und der zweite Aktuator so angeordnet sein, dass die beiden Kolben bei Bestromung des jeweils zugehörigen Elektromagneten in dieselbe Richtung beaufschlagt werden. Dabei ist vorgesehen, dass der erste und der zweite Aktuator jeweils in eine erste Aktuierposition und in eine hiervon abweichende zweite Aktuierposition überführbar sind. Mit dieser Anordnung können in einer konkreten Ausführung beispielsweise folgende Schaltungen des Stellelements realisiert werden: eine erste Stellposition des Stellelements kann dadurch eingestellt werden, dass der erste Aktuator und der zweite Aktuator jeweils in der ersten Aktuierposition sind; eine zweite Stellposition des Stellelements kann dadurch eingestellt werden, dass einer von dem ersten und zweiten Aktuator in der ersten Aktuierposition und der andere von dem ersten und zweiten Aktuator in der zweiten Aktuierposition ist; und eine dritte Stellposition des Stellelements kann dadurch eingestellt werden, dass der erste Aktuator und der zweite Aktuator jeweils in der zweiten Aktuierposition sind. Die erste und zweite Aktuierposition kann beispielsweise eine eingefahrene und ausgefahrene Position (oder umgekehrt) des jeweiligen Aktuatorkolbens sein.

Bei Verbindung des Stellelements mit der Kupplung derart, dass die zweite Schaltstellung einer Leerlaufstellung der Kupplung entspricht, würde eine ungewünschte Fehlfunktion eines der beiden Aktuatoren dazu führen, dass das Stellelement automatisch in die zweite Schaltstellung bewegt und die Kupplung entsprechend geöffnet wird.

Nach einer zweiten Möglichkeit können der erste und der zweite Aktuator so angeordnet sein, dass die beiden Kolben bei Bestromung des jeweils zugehörigen Elektromagneten in entgegengesetzte Richtungen beaufschlagt werden. Mit dieser Anordnung können in einer konkreten Ausführung beispielsweise folgende Schaltungen des Stellelements realisiert werden: eine erste Stellposition des Stellelements kann dadurch eingestellt werden, dass der eine von dem ersten und zweiten Aktuator in der ersten Aktuierposition und der andere von dem ersten und zweiten Aktuator in der zweiten Aktuierposition ist; eine neutrale Stellposition des Stellelements kann dadurch eingestellt werden, dass der erste Aktuator und der zweite Aktuator beide in der ersten Aktuierposition oder in der zweiten Aktuierposition sind; und eine zweite Stellposition des Stellelements kann dadurch eingestellt werden, dass der eine von dem ersten und zweiten Aktuator in der zweiten Aktuierposition und der andere von dem ersten und zweiten Aktuator in der ersten Aktuierposition ist.

Bei Verbindung des Stellelements mit der Kupplung derart, dass die zweite Schaltstellung einer Leerlaufstellung der Kupplung entspricht, würde ein ungewünschte Fehlfunktion beider Aktuatoren beispielsweise bei Stromausfall dazu führen, dass das Stellelement automatisch in die zweite Schaltstellung bewegt und die Kupplung entsprechend geöffnet wird.

Nach einer zweiten Ausführungsform kann zumindest einer von dem ersten und zweiten Aktuator in Form eines bistabilen Aktuators gestaltet sein. Hiermit ist im Sinne der vorliegenden Offenbarung insbesondere ein Aktuator gemeint, dessen Kolben bei Bestromen des Elektromagneten mit einer ersten Polarität in eine erste Aktuierposition überführt wird und bei Bestromen des Elektromagneten mit einer zweiten Polarität in eine zweite Aktuierposition. Wird der Elektromagnet stromlos geschaltet, bleibt der Kolben in der jeweils gerade anliegenden ersten beziehungsweise zweiten Aktuierposition. Ein bistabiler Aktuator erfordert somit keine Rückstellfeder.

Es versteht sich, dass nach einer dritten Ausführungsform eine Kombination der ersten und zweiten Ausführungsform derart denkbar ist, dass einer der beiden Aktuatoren als monostabiler Aktuator gestaltet ist und der andere als bistabiler Aktuator.

Die Lösung der oben genannten Aufgabe besteht weiter in einer Elektroantriebsanordnung für ein Kraftfahrzeug, umfassend: eine elektrische Maschine zum Antreiben des Kraftfahrzeugs, ein von der elektrischen Maschine antreibbares Schaltgetriebe, das nach einer der oben genannten Ausführungsformen gestaltet ist, und ein von dem Schaltgetriebe antreibbares Differentialgetriebe, wobei die Antriebswelle des Schaltgetriebes mit der elektrischen Maschine antriebsverbunden ist und die Abtriebswelle des Schaltgetriebes mit dem Differentialgetriebe antriebsverbunden ist.

Die elektrische Maschine des Elektroantriebs wandelt Energie um und kann als Motor oder Generator arbeiten. Im Motorbetrieb wandelt die elektrische Maschine elektrische Energie in mechanische Energie um, so dass ein Antriebsstrang des Kraftfahrzeugs angetrieben werden kann. Im Generatorbetrieb wandelt die elektrische Maschine mechanische Energie in elektrische Energie um, welche dann in einer Batterie gespeichert werden kann. Dieser Vorgang, bei dem Bremsenergie des Kraftfahrzeugs zurückgewonnen wird, wird auch als Rekuperation bezeichnet.

Ein erfindungsgemäßes Verfahren zum Steuern des Schaltgetriebes ist im Anspruch 14 enthalten.

Durch diese Ausgestaltung mit Aktuatoren, die auf jeweils genau zwei Positionen einstellbar sind, lässt sich das Stellelement auf technisch einfache Weise in genau drei Stellpositionen überführen.

Beispielsweise kann gemäß einer ersten Verfahrensführung vorgesehen sein, dass das Stellelement in eine erste Stellposition überführt wird, indem der erste Aktuator und der zweite Aktuator jeweils auf die erste Aktuierposition eingestellt werden; das Stellelement in eine neutrale Stellposition überführt wird, indem einer von dem ersten und zweiten Aktuator in die erste Aktuierposition und der andere von dem ersten und zweiten Aktuator auf die zweite Aktuierposition eingestellt wird; und das Stellelement in eine zweite Stellposition überführt wird, indem der erste Aktuator und der zweite Aktuator jeweils auf die zweite Aktuierposition eingestellt werden.

Nach einer alternativen zweiten Verfahrensführung kann vorgesehen sein, dass das Stellelement in eine erste Stellposition überführt wird, indem der eine von dem ersten und zweiten Aktuator in der ersten Aktuierposition und der andere von dem ersten und zweiten Aktuator in der zweiten Aktuierposition eingestellt wird; das Stellelement in eine neutrale Stellposition überführt wird, indem der erste Aktuator und der zweite Aktuator beide auf die erste Aktuierposition oder die zweite Aktuierposition eingestellt werden; und das Stellelement in eine zweite Stellposition überführt werden, indem der eine von dem ersten und zweiten Aktuator auf die zweite Aktuierposition und der andere von dem ersten und zweiten Aktuator auf die erste Aktuierposition eingestellt wird. Es versteht sich, dass weitere Verfahrensführungen denkbar sind, die nach den jeweiligen technischen Anforderungen an das Schaltgetriebe, insbesondere auch an das Verhalten bei ungewünschten Fehlfunktionen, im Rahmen der angehängten Ansprüchen gestaltet werden können.

Bevorzugte Ausführungsformen werden nachstehend anhand der Zeichnungsfiguren erläutert. Hierin zeigt:
- Figur 1: ein erfindungsgemäßes Schaltgetriebe in einer ersten Ausführungsform;
- Figur 2: ein mögliches Schaltschema des Schaltgetriebes nach Figur 1;
- Figur 3: die Aktuatoranordnung des Schaltgetriebes aus Figur 1 als Detail
A) in einer ersten Schaltstellung;
B) in einer zweiten Schaltstellung;
C) in einer dritten Schaltstellung;
- Figur 4: eine erfindungsgemäße Elektroantriebsanordnung zum Antreiben eines Kraftfahrzeugs mit einem Schaltgetriebe nach Figur 1;
- Figur 5: ein erfindungsgemäßes Schaltgetriebe in einer zweiten Ausführungsform;
- Figur 6: ein mögliches Schaltschema des Schaltgetriebes nach Figur 5;
- Figur 7: die Aktuatoranordnung des Schaltgetriebes aus Figur 5 als Detail
A) in einer ersten Schaltstellung;
B) in einer zweiten Schaltstellung;
C) in einer dritten Schaltstellung;
- Figur 8: ein erfindungsgemäßes Schaltgetriebe in einer dritten Ausführungsform;
- Figur 9: ein mögliches Schaltschema des Schaltgetriebes nach Figur 8;
- Figur 10: die Aktuatoranordnung des Schaltgetriebes aus Figur 8 als Detail
A) in einer ersten Schaltstellung;
B) in einer zweiten Schaltstellung;
C) in einer dritten Schaltstellung;
- Figur 11: eine Elektroantriebsanordnung mit einem erfindungsgemäßen Schaltgetriebe in einer weiteren Ausführungsform; und
- Figur 12: eine Elektroantriebsanordnung mit einem erfindungsgemäßen Schaltgetriebe in einer weiteren Ausführungsform.

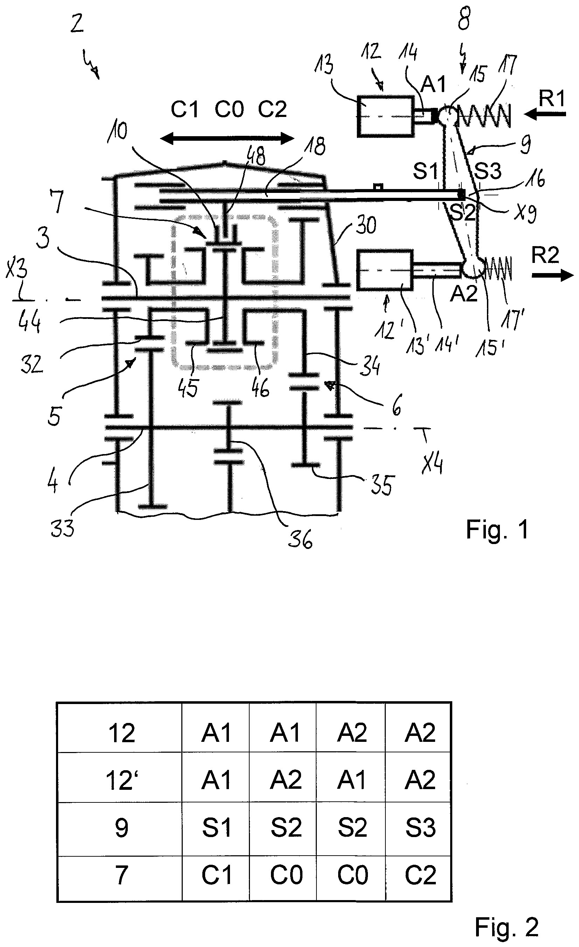

Die Figuren 1 bis 4, die im Folgenden gemeinsam beschrieben werden, zeigen ein erfindungsgemäßes Schaltgetriebe 2 in einer ersten Ausführungsform. Das Schaltgetriebe 2 umfasst eine Antriebswelle 3, eine erste Schaltstufe 5, eine zweite Schaltstufe 6, eine Abtriebswelle 4, eine Kupplung 7 und eine Aktuierungsanordnung 8. Die beiden Schaltstufen 5, 6 ermöglichen, dass in das Schaltgetriebe eingeleitetes Drehmoment von der Antriebswelle 3 auf die Abtriebswelle 4 mit zwei unterschiedlichen Übersetzungsverhältnissen i1, i2 übertragen werden kann. Die beiden Schaltstufen 5, 6 weisen jeweils mehrere drehmomentübertragende Glieder auf.

Die Antriebswelle 3 kann von einer Antriebsquelle drehend angetrieben werden, so dass Drehmoment in das Schaltgetriebe 2 eingeleitet werden kann. Als Antriebsquelle kann insbesondere eine elektrische Maschine vorgesehen sein. In das Schaltgetriebe 2 eingeleitetes Drehmoment kann mittels der Kupplung 7 wahlweise über die erste Schaltstufe 5 oder die zweite Schaltstufe 6 auf die Abtriebswelle 4 übertragen werden. Hierfür ist die Kupplung 7 derart ausgestaltet, dass sie je nach Kupplungsstellung ein Glied der ersten Schaltstufe 5 oder ein Glied der zweiten Schaltstufe 6 mit der Antriebswelle 3 antriebsmäßig verbinden oder von dieser lösen kann.

Zum Betätigen der Kupplung 7 dient die Aktuierungsanordnung 8, die als funktionale Baugruppe auch als Aktuatoreinheit bezeichnet werden kann. Die Aktuierungsanordnung 8 kann beispielsweise von einer elektronischen Regeleinheit (nicht dargestellt) steuerbar sein, die zur Regelung der Fahrdynamik des Kraftfahrzeugs dient. Die Aktuierungsanordnung 8 umfasst ein bewegbares Stellelement 9 sowie einen ersten elektromagnetisch betätigbaren Aktuator 12 und einen zweiten elektromagnetisch betätigbaren Aktuator 12'. Das Stellelement 9 ist mit kinematisch mit den Aktuatoren 12, 12' wirkverbunden und kann von diesen in drei Stellpositionen S1, S2, S3 bewegt werden. Das Stellelement 9 ist ferner mit einem beweglichen Kupplungsteil 10 der Kupplung 7 verbunden, welches entsprechend in drei Kupplungspositionen C1, C0, C2 überführbar ist. Die beiden Aktuatoren 12, 12' sind unabhängig voneinander ansteuerbar und wirken entsprechend unabhängig voneinander auf das Stellelement 9 ein. Je nach individueller Position der beiden Aktuatoren 12, 12' kann das Stellelement 9 wahlweise in die erste, zweite oder dritte Stellpositionen S1, S2, S3 überführt werden, so dass das Schaltgetriebe 2 wahlweise in den ersten Gang, eine Neutralstellung oder den zweiten Gang geschaltet werden kann.

Die beiden elektromagnetischen Aktuatoren 12, 12' sind vorzugsweise so gestaltet, dass sie beide jeweils genau zwei Aktuierungspositionen A1, A2 einnehmen können. Mit Aktuierungspositionen sind dabei unterschiedliche Stellungen gemeint, die ein bewegliches Aktuatorteil bei Betätigen des Aktuators einnehmen kann. Konkret können die beiden Aktuatoren 12, 12' jeweils einen Elektromagneten 13, 13' und einen Kolben 14, 14' aufweisen. Bei Bestromen des Elektromagneten 13, 13' wird der zugehörige Kolben 14, 14' von einer ersten Position A1 in eine zweite Position A2 verschoben, das heißt die beiden Positionen A1, A2 werden durch An- beziehungsweise Ausschalten des jeweiligen Aktuators eingenommen. Gleichzeitig bewirken die beiden Elektromagneten 13, 13' zusätzliche Redundanz, um ein ungewünschtes Schalten bei unvorhersehbar eintretender Fehlfunktion des Systems zu vermeiden.

Das Stellelement 9 ist in Form einer schwenkbaren Wippe gestaltet, die um eine Schwenkachse X9 schwenkbar ist. Auf entgegengesetzten Seiten der Schwenkachse X9 hat das Stellelement 9 einen ersten Abschnitt 15, auf den der erste elektromagnetisch betätigbare Aktuator 12 einwirkt, und einen zweiten Abschnitt 15', auf den der zweite elektromagnetisch betätigbaren Aktuator 12' einwirkt. Die beiden Abschnitte 15, 15' sind voneinander beabstandet angeordnet, so dass von dem ersten Aktuator 12 auf den ersten Abschnitt 15 eingeleitete erste Kräfte und von dem zweiten Aktuator 12' auf den zweiten Abschnitt 15' eingeleitete zweite Kräfte unterschiedliche Bewegungen des Stellelements 9 bewirken. An einem zwischen den beiden endseitigen Aktuatorabschnitten 15, 15' liegenden Stellabschnitt 16 ist ein Übertragungselement 18 angeschlossen, das die Bewegung des Stellelements 9 auf das bewegliche Kupplungsteil 10 überträgt. Der Stellabschnitt 16 liegt vorzugsweise zentral, etwa im Bereich der Schwenkachse X9 des Stellelements 9 und kann insofern auch als Zentralabschnitt bezeichnet werden.

Durch Überlagerung der Bewegungskomponenten des ersten und zweiten Aktuators 12, 12', die jeweils in genau zwei Positionen überführbar sind, kann das Stellelement 9 in drei verschiedene Stellpositionen S1, S2, S3 bewegt werden, die auch als Schaltpositionen bezeichnet werden können. Bei der vorliegenden Ausführungsform verlaufen die Kraftwirkungslinien der beiden Aktuatoren 12, 12' im Wesentlichen parallel zueinander, wobei es sich versteht, dass auch eine winklige Ausrichtung technisch möglich ist.

Bei der vorliegenden Ausführungsform sind die beiden Aktuatoren 12, 12' in Form von monostabilen Aktuatoren gestaltet. Der Kolben 14, 14' des Aktuators wird bei Bestromung des zugehörigen Elektromagneten 13, 13' kraftbeaufschlagt und ist in stromlosem Zustand des Elektromagneten kraftfrei. Bei der vorliegenden Ausführungsform ist die Anordnung derart, dass die Aktuatoren 12, 12' beim Bestromen das Stellelement 9 in Richtung R1 auf das Getriebe zu beaufschlagen. Je Aktuator 12, 12' ist eine Feder 17, 17' vorgesehen, die auf den zugehörigen Kolben 14, 14' in einer zur Kraft des Elektromagneten entgegengesetzten Richtung R2 einwirkt, also vorliegend vom Getriebe weg. Somit wird der Kolben 14, 14' bei ausgeschaltetem Elektromagneten von der Feder 17, 17' wieder in die Ausgangsstellung zurück beaufschlagt. Es versteht sich, dass die Wirkungsrichtung der Aktuatoren 12, 12' beziehungsweise der Federn 17, 17' auch umgekehrt sein können.

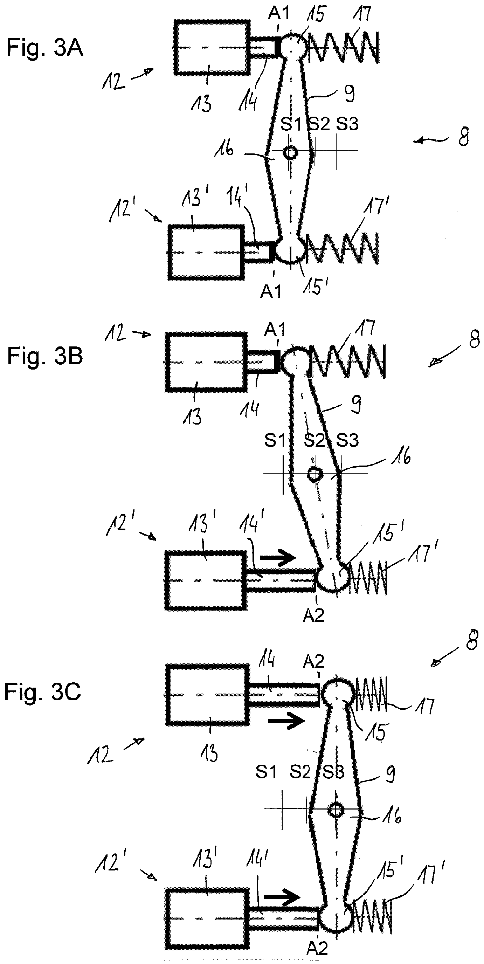

Unter näherer Bezugnahme auf die Figuren 2 und 3 wird hiermit eine mögliche Schaltanordnung beziehungsweise Bewegungskinematik des Schaltgetriebes 2 nach Figur 1 beschrieben. Der erste und der zweite Aktuator 12, 12' können durch Bestromen des zugehörigen Elektromagneten 13, 13' jeweils in eine erste Aktuierposition A1 und in eine hiervon abweichende zweite Aktuierposition A2 überführt werden. Konkret ist bei der vorliegenden Ausführungsform weiter vorgesehen, dass der erste und der zweite Aktuator 12, 12' so angeordnet sind, dass die beiden Kolben 14, 14' bei Bestromung des jeweils zugehörigen Elektromagneten 13, 13' in dieselbe Richtung R1 beaufschlagt werden.

Bei der vorliegenden Ausführungsform kann eine erste Stellposition S1 des Stellelements 9 dadurch eingestellt werden, dass der erste Aktuator 12 und der zweite Aktuator 12' jeweils in der ersten Aktuierposition A1 sind, wie in Figur 3A gezeigt. Der zentrale Abschnitt 16 des Stellelements 9 befindet sich in einer Endposition (linke Position in Figur 3A), so dass entsprechend auch das hiermit verbundene Übertragungsglied 18 eine entsprechende Endposition einnimmt. Das Bewegliche Kupplungsglied 10 ist in die erste Kupplungsposition C1 verschoben, so dass Drehmoment über die erste Schaltstufe 5 von der Eingangswelle 3 auf die Ausgangswelle 4 übertragen wird.

Durch Betätigen der Aktuatoren 12, 12' derart, dass einer in der ersten Aktuierposition A1 und der andere in der zweiten Aktuierposition A2 ist, wird das Stellelement 9 in eine zweite Stellposition S2 bewegt, welche in den Figuren 1 und 3B gezeigt ist. Das mit dem Stellelement 9 verbundene Übertragungsglied 18 ist zusammen mit dem Stellabschnitt 16 aus der Endstellung in eine mittlere Stellung bewegt. Entsprechend ist das mit dem Übertragungsglied 18 verbundene Kupplungsglied 10 in die neutrale Kupplungsposition C0 überführt, so dass die Eingangswelle 3 und die Ausgangswelle 4 voneinander entkoppelt sind und frei gegeneinander drehen können.

Eine dritte Stellposition S3 des Stellelements 9 kann dadurch eingestellt werden, dass der erste Aktuator 12 und der zweite Aktuator 12' beide in der zweiten Aktuierposition A2 sind. Diese Position ist in Figur 3C gezeigt. Der zentrale Abschnitt 16 des Stellelements 9 befindet sich einer zweiten Endposition (rechte Position in Figur 3C), so dass auch das hiermit verbundene Übertragungsglied 18 eine entsprechende Endposition einnimmt. Das Bewegliche Kupplungsglied 10 ist in die zweite Kupplungsposition C2 verschoben, so dass Drehmoment über die zweite Schaltstufe 6 von der Eingangswelle 3 auf die Ausgangswelle 4 übertragen wird.

Ein Vorteil der Aktuierungsanordnung 8 mit bewegbarem Stellelement 9 und zwei darauf einwirkenden Aktuatoren 12, 12' ist, dass sich diverse kinematische Bewegungen beziehungsweise Schaltvorgänge des Stellelements realisieren lassen, die flexibel auf den Bedarf an die konkreten technischen Anforderungen angepasst werden können. So können individuelle Lösungen in Bezug auf die Sicherheitsfunktionen der Aktuierungsanordnung und des Antriebsstrangs verwirklicht werden, wie sie beispielsweise bei Stromausfall oder unvorhersehbaren technischen Fehlfunktionen nötig sind.

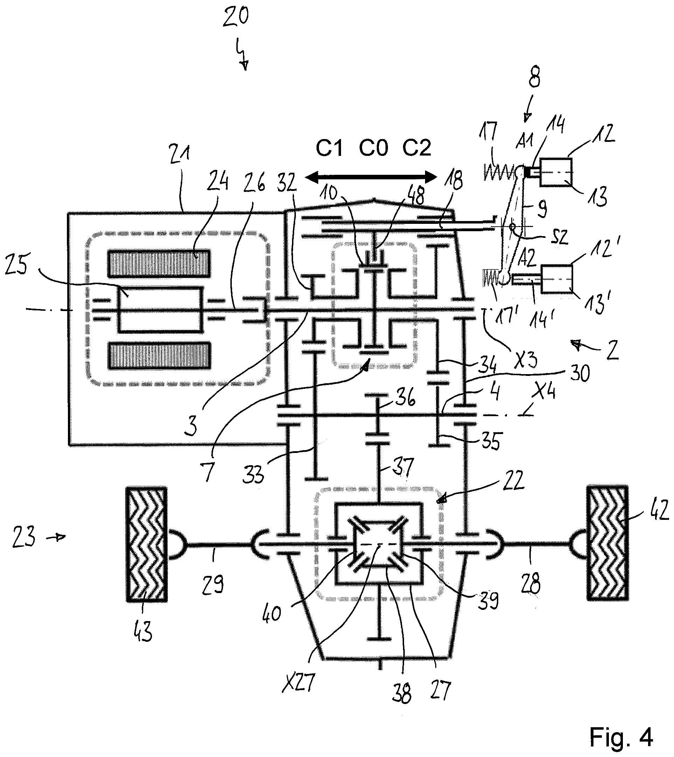

In Figur 4 ist ein erfindungsgemäßer Elektroantrieb 20 mit einem erfindungsgemäßen Schaltgetriebe 2 aus Figur 1 gezeigt. Der Elektroantrieb 20 umfasst eine elektrische Maschine 21, das Schaltgetriebe 2 mit Aktuierungsanordnung 8 und ein Differentialgetriebe 22. Der Elektroantrieb 20 dient zum Antreiben einer Antriebsachse 23 eines Kraftfahrzeugs. Dabei kann der Elektroantrieb 20 als alleinige Antriebsquelle oder mit einer zusätzlichen Antriebsquelle verwendet werden.

Die elektrische Maschine 21 umfasst einen Stator 24 und einen hierzu drehbaren Rotor 25, der bei Bestromen des Elektromotors eine Motorwelle 26 drehend antreibt. Die Drehbewegung der Motorwelle 26 wird auf die Antriebswelle 3 des Schaltgetriebes 2 übertragen. Die elektrische Maschine 21 wird von einer Batterie (nicht dargestellt) mit elektrischem Strom versorgt, wobei auch vorgesehen sein kann, dass die Batterie im Generatorbetrieb von der elektrischen Maschine aufgeladen wird.

Wie oben beschrieben, weist das Schaltgetriebe 2 zwei Schaltstufen 5, 6 auf, so dass von der elektrischen Maschine 21 eingeleitetes Drehmoment von der Antriebswelle 3 auf die Abtriebswelle 4 mit zwei unterschiedlichen Übersetzungsverhältnissen i1, i2 übertragen werden kann. Die Abtriebswelle 4, die auch als Zwischenwelle bezeichnet werden kann, ist mit einem Differentialträger 27 des Differentialgetriebes 22 antriebsverbunden. Mittels des Differentialgetriebes 22 wird das eingeleitete Drehmoment auf zwei Seitenwellen 28, 29 zum Antreiben der Fahrzeugräder aufgeteilt.

Das Schaltgetriebe 2 ist als Untersetzungsgetriebe gestaltet, so dass eine vom Elektromotor 21 eingeleitete Drehbewegung vom Schnellen ins Langsame übersetzt wird. Die erste Schaltstufe 5, die auch als Gangschaltstufe oder Übersetzungsstufe bezeichnet werden kann, umfasst als drehmomentübertragende Glieder ein auf der Antriebswelle 3 drehbar gelagertes erstes Antriebsrad 32 und ein drehfest mit der Zwischenwelle 4 verbundenes erstes Zwischenrad 33, die miteinander in Verzahnungseingriff sind. Erstes Antriebsrad 32 und erstes Zwischenrad 33 bilden einen ersten Rädersatz mit einem ersten Übersetzungsverhältnis i1. Die zweite Übersetzungsstufe umfasst als drehmomentübertragende Glieder ein auf der Antriebswelle 3 drehbar gelagertes zweites Antriebsrad 34 und ein drehfest mit der Zwischenwelle 4 verbundenes zweites Zwischenrad 35, die miteinander in Verzahnungseingriff sind. Zweites Antriebsrad 34 und zweites Zwischenrad 35 bilden einen zweiten Rädersatz mit einem zweiten Übersetzungsverhältnis i2. Eine dritte Übersetzungsstufe umfasst das mit der Zwischenwelle 4 drehfest verbundene Abtriebsrad 36 und das hiermit kämmende fest mit dem Differentialträger 11 verbundene Ringrad 37. Das Abtriebsrad 36 der Zwischenwelle 4 und das Ringrad 37 bilden dabei einen dritten Rädersatz mit einem dritten Übersetzungsverhältnis i3.

Die Antriebswelle 3 ist mittels geeigneter Lager in einem Gehäuse 30 des Schaltgetriebes 2 um eine erste Drehachse X3 drehbar gelagert. Die Antriebsräder 32, 34 sind über Wellenlager auf der Antriebswelle 3 drehbar gelagert. Die Zwischenwelle 4 ist mittels geeigneter Lager im Gehäuse 30 um eine zweite Drehachse X4 drehbar gelagert. Das Abtriebsrad 36 ist drehfest mit der Zwischenwelle 4 verbunden und axial zwischen dem ersten und zweiten Zwischenrad 33, 35 angeordnet. Die Zwischenräder 33, 35 sind beispielsweise über Wellenverzahnungen (Splines) mit der Zwischenwelle 4 drehfest verbunden. Die Antriebswelle 3, die Zwischenwelle 4 und die Drehachse X27 des Differentialträgers 27 verlaufen parallel zueinander.

Das Abtriebsrad 36 der Zwischenwelle 4 kämmt mit dem Ringrad 37 des Differentialträgers 27, um Drehmoment in das Differential 22 einzuleiten. Der Differentialträger 27, der auch als Differentialkorb bezeichnet wird, ist in dem Gehäuse 30 mittels geeigneter Lager um die Drehachse X27 drehbar gelagert. Das Differential 27 umfasst mehrere Differentialräder 38, die in dem Differentialträger 27 auf einer zur Drehachse X27 senkrechten Achse X38 drehbar gelagert sind, sowie zwei Seitenwellenräder 39, 40, die jeweils koaxial zur Drehachse X27 drehbar angeordnet und mit den Differentialrädern 38 in Verzahnungseingriff sind. Vom Ringrad 37 in den Differentialträger 27 eingeleitetes Drehmoment wird über die Differentialräder 38 auf die beiden Seitenwellenräder 39, 40 übertragen, zwischen denen eine ausgleichende Wirkung besteht. Die Seitenwellenräder 39, 40 sind zur Übertragung eines Drehmoments mit den zugehörigen Seitenwellen 28, 29 verbunden, die das eingeleitete Drehmoment auf die Räder 42, 43 des Kraftfahrzeugs übertragen.

Das Schaltgetriebe 2 wird mittels der Kupplung 7 geschaltet, die von der Aktuatoreinheit 8 betätigt wird. Durch entsprechendes Ansteuern der Aktuatoreinheit 8 kann das Schaltgetriebe 2 wahlweise in Neutralstellung, den ersten Gang oder den zweiten Gang geschaltet werden. In Abwandlung von dem in Figur 1 gezeigten Schaltgetriebe ist die Aktuatoreinheit 8 entgegengesetzt angeordnet, das heißt die beiden Aktuatoren 12, 12' wirken bei Bestromen in Richtung R1 zum Getriebe, während die Federn 17, 17' auf das Stellelement 9 in Richtung R2 vom Getriebe wirken. Hierdurch ergibt sich hinsichtlich der Betätigung des ersten und zweiten Aktuators 12, 12' eine Umkehrung der ersten und dritten Schaltstellung S1, S3. Im Übrigen ist die Aktuatoreinheit 8 gleich aufgebaut wie in den Figuren 1 und 3, auf die insofern Bezug genommen wird.

Die Kupplung 7 ist axial zwischen dem ersten Antriebsrad 32 und dem zweiten Antriebsrad 34 angeordnet; sie kann auch als Kupplungseinheit bezeichnet werden. Die Kupplung 7 weist ein Eingangsteil 44, das mit der Antriebswelle 3 drehfest verbunden und axial fixiert ist, ein erstes Ausgangsteil 45, das mit dem ersten Antriebsrad 32 fest verbunden ist, und ein zweites Ausgangsteil 46, das mit dem zweiten Antriebsrad 34 fest verbunden ist. Mit dem beweglichen Kupplungsteil 10 kann das Eingangsteil 44 optional mit dem ersten Ausgangsteil 45 oder dem zweiten Ausgangsteil 46 zur Übertragung eines Drehmoments verbunden werden. Das bewegliche Kupplungsteil 10, das auch als Koppelelement bezeichnet werden kann, ist insbesondere in Form einer Schiebemuffe gestaltet, die auf dem Eingangsteil 46 drehfest und axial verschiebbar gehalten ist. Die Betätigung der Schiebemuffe 45 erfolgt über das Übertragungsglied 18 mittels der Aktuierungsanordnung 8. Das Übertragungsglied 18 ist axial verschiebbar und kann insofern auch als Verschiebeteil bezeichnet werden. Hieran ist ein Betätigungselement 48 befestigt, das der Bewegung des Übertragungsglieds 18 folgt und entsprechend das bewegliche Kupplungsteil 10 betätigt. Das Betätigungselement 48 kann beispielsweise in Form einer Schaltgabel gestaltet sein, die axial formschlüssig mit dem beweglichen Kupplungsteil verbunden ist, beispielsweise mittels zweier Gleitsteine, die in eine Ringnut der Schiebemuffe 10 eingreifen.

Die Kupplungseinheit 7 kann je Ausgangsteil 43, 44 einen Synchronisiermechanismus aufweisen, welcher vor dem Schalten eine Drehzahlangleichung der miteinander zu verbindenden Bauteile vornimmt, das heißt zwischen dem Eingangsteil 42 und dem jeweiligen Ausgangsteil 43, 44. Es ist jedoch auch denkbar, dass die Kupplungseinheit 8 als reine Formschlusskupplung ohne Synchronisierung ausgestaltet ist oder als Reibungskupplung.

Durch entsprechendes Ansteuern der Kupplungseinheit 7 mittels der Aktuatoreinheit 8 kann Drehmoment wahlweise über den ersten Leistungspfad oder alternativ über den zweiten Leistungspfad vom Elektromotor 21 auf das Differential 22 beziehungsweise die Antriebsachse 23 übertragen werden. In der Neutralposition (C0), welche in den Figuren 1 und 4 gezeigt ist und auch als Leerlaufposition bezeichnet werden kann, ist das Koppelelement 10 in einer zentralen Stellung. In dieser Position sind der Elektromotor 21 und das Differential 22 voneinander entkoppelt, so dass keine Drehmomentübertragung zwischen dem Elektromotor 21 und den Seitenwellen 82, 29 (oder umgekehrt) erfolgen kann. In der ersten Schaltposition (C1) ist das Koppelelement 10 mit dem ersten Ausgangsteil 45 beziehungsweise ersten Antriebsrad 32 drehfest verbunden, so dass Drehmoment vom Elektromotor 21 auf das Differential 22 über den ersten Leistungspfad übertragen wird. In der zweiten Schaltposition (C2) ist das Koppelelement 10 mit dem zweiten Ausgangsteil 46 beziehungsweise zweiten Antriebsrad 34 gekoppelt, so dass Drehmoment über den zweiten Leistungspfad übertragen wird.

Bei Auftreten einer ungewünschten Fehlfunktion eines der beiden Aktuatoren 12, 12' wird das Stellelement 9 bei der vorliegenden Ausführungsform durch die Federn 17, 17' in die zweite Schaltstellung S2 bewegt, so dass die Kupplung entsprechend geöffnet wird, das heißt in die Neutralposition C0 überführt wird.

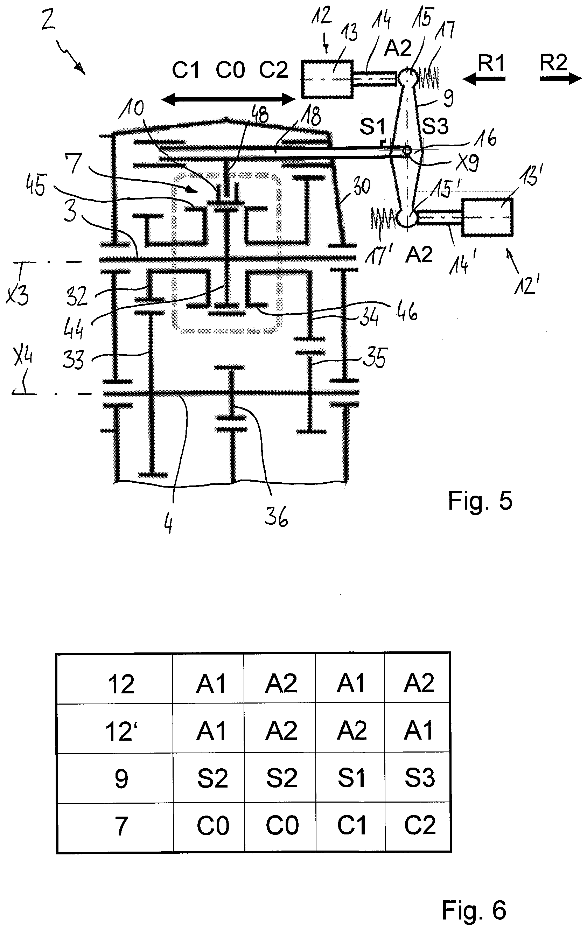

Die Figuren 5 bis 7, welche im Folgenden gemeinsam beschrieben werden, zeigen ein erfindungsgemäßes Schaltgetriebe 2 in einer weiteren Ausführungsform. Dieses entspricht weitestgehend dem in den Figuren 1 bis 3 gezeigten Schaltgetriebe, so dass hinsichtlich der Gemeinsamkeiten auf die obige Beschreibung Bezug genommen wird. Dabei sind gleiche beziehungsweise einander entsprechende Einzelheiten mit gleichen Bezugsziffern versehen wie in den Figuren 1 bis 3.

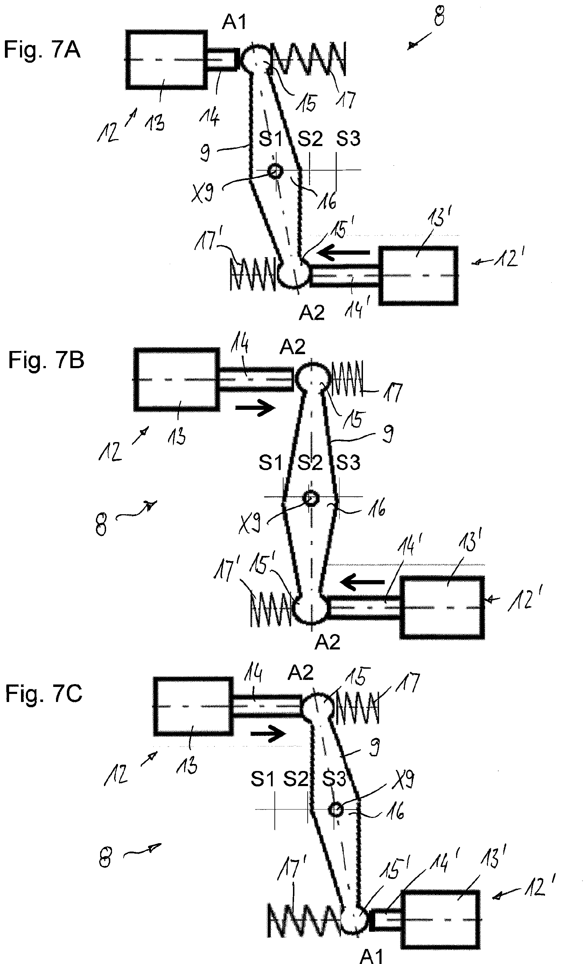

Der einzige Unterschied besteht in der Ausgestaltung der Aktuierungsanordnung 2. Die beiden Aktuatoren 12, 12' sind bei der Ausführungsform gemäß den Figuren 5 bis 7 so angeordnet, dass die beiden Kolben 14, 14' bei Bestromung des jeweils zugehörigen Elektromagneten 13, 13' in entgegengesetzte Richtungen R1, R2 beaufschlagt werden. Mit dieser Anordnung können beispielsweise folgende Schaltungen des Stellelements 9 realisiert werden:
Eine erste Stellposition S1 des Stellelements 9 kann dadurch eingestellt werden, dass der erste Aktuator 12 in die erste Aktuierposition A1 und der zweite Aktuator 12' in die zweite Aktuierposition A2 überführt wird. Diese Schaltstellung ist in Figur 7A gezeigt. Der Stellabschnitt 16 des Stellelements 9 befindet sich in einer Endposition (linke Position in Figur 7A), so dass entsprechend auch das hiermit verbundene Übertragungsglied 18 eine entsprechende Endposition einnimmt. Das bewegliche Kupplungsglied 10 ist in die erste Kupplungsposition C1 verschoben, so dass Drehmoment über die erste Schaltstufe 5 von der Eingangswelle 3 auf die Ausgangswelle 4 übertragen wird.

Durch Betätigen der Aktuatoren 12, 12' derart, dass beide Kolben 14, 14' die zweite Aktuierposition A2 einnehmen, wird das Stellelement 9 in eine zweite Stellposition S2 bewegt, die in den Figuren 5 und 7B gezeigt ist. Das mit dem Stellelement 9 verbundene Übertragungselement 18 ist zusammen mit dem Stellabschnitt 16 aus der Endstellung in eine mittlere Stellung bewegt. Entsprechend ist das mit dem Übertragungselement 18 verbundene Kupplungsglied 10 in die neutrale Kupplungsposition C0 überführt, so dass die Eingangswelle 3 und die Ausgangswelle 4 voneinander entkoppelt sind und frei gegeneinander drehen können. Die zweite Stellposition S2 des Stellelements 9 kann auch dadurch eingestellt werden, dass beide Aktuatoren 12, 12' in die erste Aktuierposition A1 überführt werden. Dies ist nur schematisch anhand des Schaltplans dargestellt, nämlich in der zweiten Spalte (A1, A1, S2, C0).

Eine dritte Stellposition S3 des Stellelements 9 kann dadurch eingestellt werden, dass der erste Aktuator 12 in die zweite Aktuierposition A2 überführt wird und der zweite Aktuator 12' in die erste Aktuierposition A1. Dieser Schaltzustand ist in Figur 7C gezeigt. Der Stellabschnitt 16 des Stellelements 9 befindet sich einer zweiten Endposition (rechte Position in Figur 7C), so dass auch das hiermit verbundene Übertragungsglied 18 eine entsprechende Endposition einnimmt. Das Bewegliche Kupplungsglied 10 ist in die zweite Kupplungsposition C2 verschoben, so dass Drehmoment über die zweite Schaltstufe 6 von der Eingangswelle 3 auf die Ausgangswelle 4 übertragen wird.

Bei der vorliegenden Ausführungsform gemäß den Figuren 5 bis 7 wird die erste Aktuatorposition A1 mittels der auf den jeweiligen Endabschnitt 15, 15' wirkenden Feder 17, 17' nach Stromlosschalten des zugehörigen Elektromagneten 13, 13' erreicht. Entsprechend führt ein Stromlosschalten beider Aktuatoren 12, 12', beispielsweise aufgrund einer ungewollten Fehlfunktion, automatisch dazu, dass das Schaltgetriebe 2 in die Neutralstellung überführt wird, so dass die beiden Wellen 3, 4 frei gegeneinander drehen können.

Der erste Aktuator 12 erzeugt beim Bestromen eine Kraft in die erste Richtung R1 vom Getriebe weg, wohingegen der zweite Aktuator 12' beim Bestromen eine Betätigungskraft in die zweite Richtung R2 auf das Getriebe zu bewirkt. Es versteht sich, dass nach einer alternativen Variante auch eine umgekehrte Anordnung derart möglich ist, dass der erste Aktuator 12 in die zweite Richtung R2 wirkt und der zweite Aktuator 12' in die erste Richtung R1 wirkt. In diesem Fall wären die Schaltzustände zum Einstellen der ersten und zweiten Kupplungsposition (C1, C2) entsprechend umgekehrt.

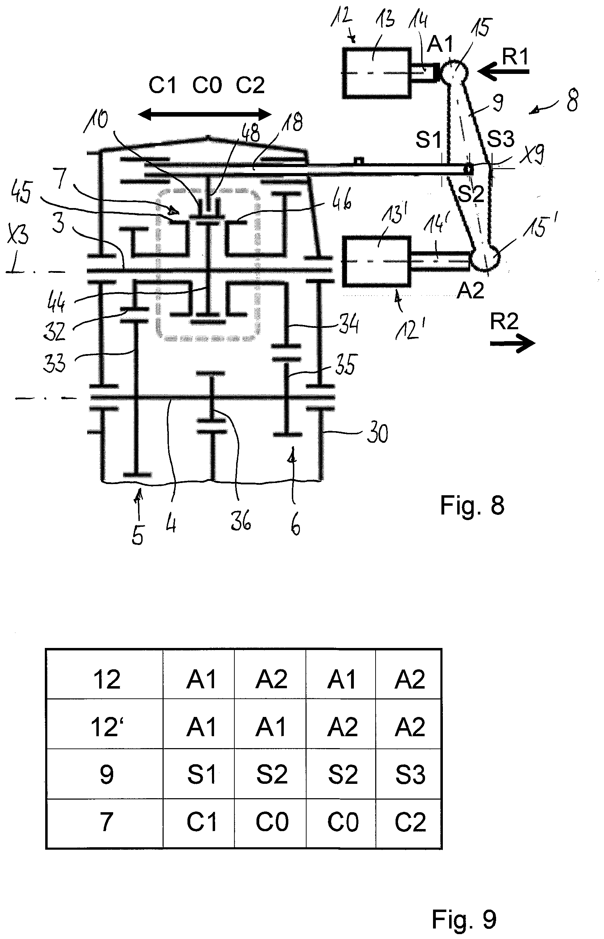

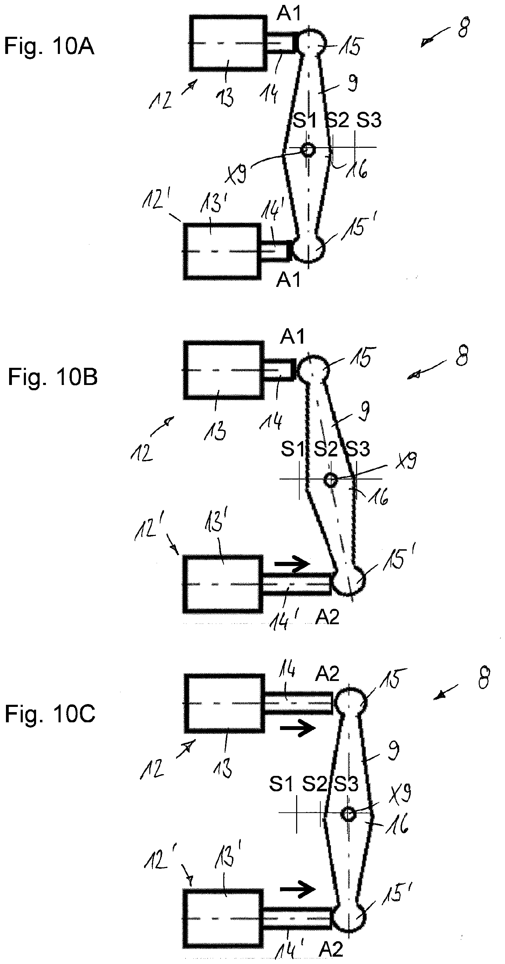

Die Figuren 8 bis 10, welche im Folgenden gemeinsam beschrieben werden, zeigen ein erfindungsgemäßes Schaltgetriebe 2 in einer weiteren Ausführungsform. Dieses entspricht weitestgehend dem in den Figuren 1 bis 3 gezeigten Schaltgetriebe, so dass hinsichtlich der Gemeinsamkeiten auf die obige Beschreibung Bezug genommen wird. Dabei sind gleiche beziehungsweise einander entsprechende Einzelheiten mit gleichen Bezugsziffern versehen wie in den Figuren 1 bis 3.

Der einzige Unterschied besteht in der Ausgestaltung der Aktuierungsanordnung 2. Dabei ist vorgehen, dass die beiden Aktuatoren 12, 12' als bistabile Aktuatoren gestaltet sind. Die bistabilen Aktuatoren 12, 12' sind so gestaltet, dass die Kolben 14, 14' bei Bestromen des zugehörigen Elektromagneten 13, 13' mit einer ersten Polarität (+/-) in eine erste Aktuierposition A1 überführt werden und bei Bestromen des Elektromagneten 13, 13' mit einer zweiten Polarität (-/+) in eine zweite Aktuierposition A2. Wird der Elektromagnet 13, 13' stromlos geschaltet, bleibt der Kolben 14, 14' in der jeweils gerade anliegenden Aktuierposition. Eine Rückstellfeder ist bei Verwendung bistabiler Aktuatoren nicht erforderlich.

Im Übrigen entspricht die in den Figuren 8 bis 10 gezeigte Ausführungsform insbesondere hinsichtlich der Bewegungskinematik und Einstellung der Schaltstufen derjenigen gemäß den Figuren 1 bis 4, so dass diesbezüglich abkürzend auf die obige Beschreibung Bezug genommen wird. Es versteht sich, dass das vorliegende Aktuatoranordnung 8 mit bistabilen Aktuatoren 12, 12' auch für den in Figur 4 gezeigten Elektroantrieb verwendet werden kann.

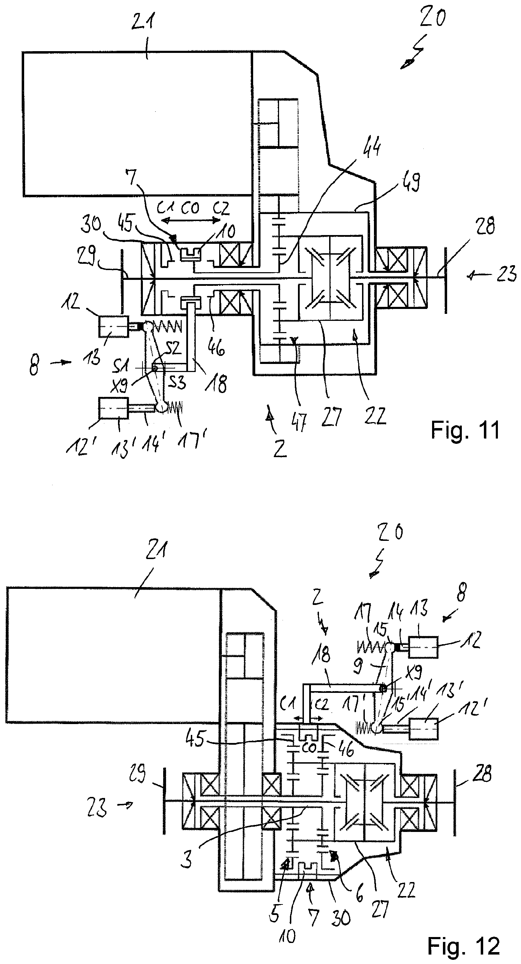

In Figur 11 ist ein Elektroantrieb in einer weiteren Ausführungsform gezeigt, die ähnlich ist wie die Ausführungsform gemäß Figur 4. Einander entsprechende oder ähnliche Einzelheiten sind daher mit denselben Bezugszeichen versehen wie in Figur 4.

Der Elektroantrieb 2 umfasst einen Elektromotor 21, eine Getriebeeinheit mit einem Schaltgetriebe 2 und einem Differentialgetriebe 22, das ein Antriebsmoment vom Elektromotor 21 auf zwei Seitenwellen 28, 29 überträgt. Das Schaltgetriebe 2 umfasst zwei Schaltstufen 5, 6, eine Kupplung 7 und eine Aktuatoranordnung 8. Durch diese Ausgestaltung kann die Antriebsachse 23 je nach Schaltstellung der Aktuatoren 12, 12' beziehungsweise der Kupplung 7 mit unterschiedlichen Drehzahlen angetrieben werden.

Die Aktuatoranordnung 8 ist aufgebaut wie die in den Figuren 1 bis 4 gezeigte, so dass diesbezüglich abkürzend auf die obige Beschreibung Bezug genommen wird. Der Elektroantrieb (ohne Aktuatoranordnung) ist ausführlich in der WO 2012/007031 A1 beschrieben, welche vollinhaltlich hier mit einbezogen wird.

Die Kupplungseinheit 7 kann von der Aktuatoranordnung 8 in drei Schaltstellungen überführt werden. In einer ersten Schaltposition S1 des Stellelements 9 befindet sich das bewegliche Kupplungsteil 10 in einer ersten Kupplungsstellung C1. In dieser Kupplungsstellung C1 ist das Sonnenrad 44 drehfest mit dem ortsfesten Gehäuse 30 verbunden. Ein vom Elektroantrieb eingeleitetes Drehmoment wird am Gehäuse 30 abgestützt, so dass der Planetenträger beziehungsweise der damit verbundene Differentialträger 27 mit einer ersten Drehzahl angetrieben wird. In der zweiten Schaltstellung S2 des Stellelements 9 ist die Kupplung 7 im Leerlauf, Kupplungsposition C0. Das Sonnenrad 44 ist frei drehbar, und zwar sowohl gegenüber dem drehend antreibbaren Gehäuse 49 als auch gegenüber dem ortsfesten Gehäuse 30. In dieser Schaltstellung findet keine Drehmomentübertragung zwischen dem Elektromotor 21 und den Seitenwellen 28, 29 statt. Durch Steuern der Aktuatoranordnung 8 in die dritte Schaltstellung S3 nimmt die Kupplung 7 die zweite Kupplungsstellung C2 ein, so dass das Sonnenrad 44 mit dem drehend antreibbaren Gehäuse 49 drehfest verbunden ist. In dieser zweiten Kupplungsposition C2 drehen das drehend antreibbare Gehäuse 49, das Hohlrad, das Sonnenrad 44, der Planetenträger und der damit verbundene Differentialkorb 27 gemeinsam um die Drehachse X27. Es findet folglich keine Übersetzung ins Langsame durch das Planetengetriebe 47 statt, so dass sich gegenüber der ersten Kupplungsposition ein anderes zweites Übersetzungsverhältnis ergibt.

In Figur 12 ist ein Elektroantrieb in einer weiteren Ausführungsform gezeigt, die ähnlich ist wie die Ausführungsform gemäß Figur 4. Einander entsprechende oder ähnliche Einzelheiten sind daher mit denselben Bezugszeichen versehen wie in Figur 4.

Der Elektroantrieb 2 umfasst einen Elektromotor 21, eine Getriebeeinheit mit einem Schaltgetriebe 2 und einem Differentialgetriebe 22, das ein Antriebsmoment vom Elektromotor 21 auf zwei Seitenwellen 28, 29 überträgt. Das Schaltgetriebe 2 umfasst zwei Schaltstufen 5, 6, eine Kupplung 7 und eine Aktuatoranordnung 8. Durch diese Ausgestaltung kann die Antriebsachse 23 je nach Schaltstellung der Aktuatoren 12, 12' beziehungsweise der Kupplung 7 mit unterschiedlichen Drehzahlen angetrieben werden.

Die Aktuatoranordnung 8 ist aufgebaut wie die in den Figuren 1 bis 4 gezeigte, so dass diesbezüglich abkürzend auf die obige Beschreibung Bezug genommen wird. Der Elektroantrieb (ohne Aktuatoranordnung) ist ausführlich in der WO 2012/007030 A1 beschrieben, welche vollinhaltlich hier mit einbezogen wird.

In einer ersten Schaltstellung S1 der Aktuatoreinheit 8, entsprechend der ersten Kupplungsposition C1 der Kupplung 7, ist das erste Hohlrad 45 drehfest mit dem ortsfesten Gehäuse 30 verbunden, während das zweite Hohlrad 46 gegenüber dem ortsfesten Gehäuse frei drehen kann. In dieser Schaltstellung erfolgt die Drehmomentübertragung von der Hohlwelle 3 über die erste Planetenradstufe 5 auf den Differentialkorb 27. In einer zweiten Schaltstellung S2 der Aktuatoreinheit, entsprechend einer neutralen Kupplungsposition C0 der Kupplung 7, sind beide Hohlräder 45, 46 relativ zum Gehäuse 30 frei drehbar. In dieser Schaltstellung findet keine Drehmomentübertragung zwischen der Hohlwelle 3 und dem Differentialkorb 27, das heißt zwischen dem Elektromotor 21 und den Seitenwellen 28, 29 statt. In einer dritten Schaltstellung S3 der Aktuatoreinheit 8, entsprechend einer zweiten Kupplungsposition C2, ist das erste Hohlrad 45 gegenüber dem ortsfesten Gehäuse 30 frei drehbar, während das zweite Hohlrad 46 mit dem ortsfesten Gehäuse 30 drehfest verbunden ist. In dieser Schaltstellung erfolgt die Drehmomentübertragung von der Hohlwelle 3 über die zweite Planetenradstufe 6 auf den Differentialkorb 27.

Die beiden letztgenannten Anwendungen gemäß den Figuren 12 und 13 sind nur beispielhaft. Es versteht sich, dass die Aktuatoranordnung 8 bei beliebigen anderen Schaltgetrieben 2 mit drei Schaltstufen eingesetzt werden kann.

### Bezugszeichenliste

- 2: Schaltgetriebe
- 3: Antriebswelle
- 4: Abtriebswelle
- 5: Schaltstufe
- 6: Schaltstufe
- 7: Kupplung
- 8: Aktuierungsanordnung
- 9: Stellelement
- 10: Kupplungsteil
- 11:
- 12, 12': Aktuator
- 13, 13': Elektromagneten
- 14, 14': Kolben
- 15, 15': Abschnitt
- 16: Stellabschnitt
- 17, 17': Feder
- 18: Übertragungselement
- 19:
- 20: Antriebsanordnung
- 21: elektrische Maschine
- 22: Differentialgetriebe
- 23: Antriebsachse
- 24: Stator
- 25: Rotor
- 26: Motorwelle
- 27: Differentialträger
- 28: Seitenwelle
- 29: Seitenwelle
- 30: Gehäuse
- 31:
- 32: erstes Antriebsrad
- 33: erstes Zwischenrad
- 34: zweites Antriebsrad
- 35: zweites Zwischenrad
- 36: Abtriebsrad
- 37: Ringrad
- 38: Differentialräder
- 39: Seitenwellenrad
- 40: Seitenwellenrad
- 42: Rad
- 43: Rad
- 44: Eingangsteil
- 45: erstes Ausgangsteil
- 46: zweites Ausgangsteil
- 47: Planetengetriebe
- 48: Betätigungselement
- 49: drehend antreibbares Gehäuse

- A1, A2: Aktuatorposition
- C0, C1, C2: Kupplungsposition
- R1, R2: Richtung
- S1, S2, S3: Stellposition
- X: Achse

## Patentansprüche

1. Schaltgetriebe, insbesondere zum Einsatz im Antriebsstrang eines Kraftfahrzeugs, umfassend:
eine Antriebswelle (3);
eine Abtriebswelle (4);
eine erste Schaltstufe (5);
eine zweite Schaltstufe (6);
eine Kupplung (7), die in drei Kupplungspositionen (C1, C0, C2) überführbar ist und ausgestaltet ist, um die Antriebswelle (3) und die Abtriebswelle (4) selektiv über die erste Schaltstufe (5) oder die zweite Schaltstufe (6) miteinander antriebsmäßig zu verbinden oder voneinander zu entkoppeln,
eine Aktuierungsanordnung (8) zum Betätigen der Kupplung (7), wobei die Aktuierungsanordnung (8) ein bewegbares Stellelement (9) aufweist, das in drei Stellpositionen (S1, S2, S3) bewegbar ist und mit einem beweglichen Kupplungsteil (10) der Kupplung (7) verbunden ist,
**dadurch gekennzeichnet, dass** die Aktuierungsanordnung (8) einen ersten elektromagnetisch betätigbaren Aktuator (12) und einen zweiten elektromagnetisch betätigbaren Aktuator (12') aufweist, die unabhängig voneinander in individuelle Positionen betätigbar sind und die gemeinsam auf das Stellelement (9) einwirken, derart, dass das Stellelement (9) je nach individueller Position des ersten und zweiten Aktuators (12, 12') von diesen in die drei Stellpositionen (S1, S2, S3) überführbar ist.

2. Schaltgetriebe nach Anspruch 1,
**dadurch gekennzeichnet,**
**dass** das Stellelement (9) einen ersten Abschnitt (15), der mit dem ersten elektromagnetisch betätigbaren Aktuator (12) verbunden ist, und einen zweiten Abschnitt (15'), der mit dem zweiten elektromagnetisch betätigbaren Aktuator (12') verbunden ist, aufweist,
wobei der erste Abschnitt (15) und der zweite Abschnitt (15') voneinander beabstandet sind, und
wobei eine erste Kraftwirkungslinie des ersten Aktuators (12) durch den ersten Abschnitt (15) verläuft und eine zweite Kraftwirkungslinie des zweiten Aktuators (12') durch den zweiten Abschnitt (15') verläuft.

3. Schaltgetriebe nach Anspruch 2,
**dadurch gekennzeichnet,**
**dass** die erste Kraftwirkungslinie und die zweite Kraftwirkungslinie parallel zueinander verlaufen.

4. Schaltgetriebe nach einem der Ansprüche 1 bis 3,
**dadurch gekennzeichnet,**
**dass** das Stellelement (9) in Form einer schwenkbaren Wippe gestaltet ist, die um eine Schwenkachse (X9) schwenkbar ist, wobei die Schwenkachse (X9) zwischen dem ersten Abschnitt (15) und dem zweiten Abschnitt (15') angeordnet ist, wobei das bewegliche Kupplungsteil (10) insbesondere im Bereich der Schwenkachse (X9) mit dem Stellelement (9) verbunden ist.

5. Schaltgetriebe nach einem der Ansprüche 1 bis 4,
**dadurch gekennzeichnet,**
**dass** der erste und der zweite Aktuator (12, 12') jeweils einen Elektromagneten (13, 13') und einen Kolben (14, 14') aufweisen, wobei der Kolben bei Betätigung des Elektromagneten verschiebbar ist.

6. Schaltgetriebe nach Anspruch 5,
**dadurch gekennzeichnet,**
**dass** zumindest einer von dem ersten und dem zweiten Aktuator (12, 12') in Form eines monostabilen Aktuators gestaltet ist, derart, dass der Kolben (14, 14') bei Bestromung des Elektromagneten (13, 13') in eine erste Richtung (R1) kraftbeaufschlagt wird und in stromlosem Zustand des Elektromagneten (13, 13') kraftfrei ist, wobei eine Rückstellfeder (17, 17') vorgesehen ist, die den Kolben (14, 14') in eine entgegengesetzte zweite Richtung (R2) beaufschlagt.

7. Schaltgetriebe nach einem der Ansprüche 5 oder 6,
**dadurch gekennzeichnet,**
**dass** der erste und der zweite Aktuator (12, 12') so angeordnet sind, dass die Kolben (14, 14') bei Bestromung des jeweils zugehörigen Elektromagneten (13, 13') in dieselbe Richtung (R1, R2) beaufschlagt werden.

8. Schaltgetriebe nach einem der Ansprüche 1 bis 7,
**dadurch gekennzeichnet,**
**dass** der erste und der zweite Aktuator (12, 12') jeweils in eine erste Aktuierposition (A1) und in eine zweite Aktuierposition (A2) überführbar sind, wobei eine erste Stellposition (S1) des Stellelements (9) dadurch definiert ist, dass der erste Aktuator (12) und der zweite Aktuator (12') jeweils in der ersten Aktuierposition (A1) sind,
wobei eine zweite Stellposition (S2) des Stellelements (9) dadurch definiert ist, dass einer von dem ersten und zweiten Aktuator (12, 12') in der ersten Aktuierposition (A1) und der andere von dem ersten und zweiten Aktuator (12', 12) in der zweiten Aktuierposition (A2) ist, und
wobei eine dritte Stellposition (S3) des Stellelements (9) dadurch definiert ist, dass der erste Aktuator (12) und der zweite Aktuator (12') jeweils in der zweiten Aktuierposition (A2) sind.

9. Schaltgetriebe nach einem der Ansprüche 5 oder 6,
**dadurch gekennzeichnet,**
**dass** der erste und der zweite Aktuator (12, 12') so angeordnet sind, dass die Kolben (14, 14') bei Bestromung des jeweils zugehörigen Elektromagneten (13, 13') in entgegengesetzte Richtungen (R1, R2) beaufschlagt werden.

10. Schaltgetriebe nach einem der Ansprüche 1 bis 6 oder 9,
**dadurch gekennzeichnet,**
**dass** der erste und der zweite Aktuator (12, 12') jeweils in eine erste Aktuierposition (A1) und in eine zweite Aktuierposition (A2) überführbar sind, wobei eine erste Stellposition (S1) des Stellelements (9) dadurch definiert ist, dass der eine von dem ersten und zweiten Aktuator (12, 12') in der ersten Aktuierposition (A1) und der andere von dem ersten und zweiten Aktuator (12', 12) in der zweiten Aktuierposition (A2) ist,
wobei eine zweite Stellposition (P2) des Stellelements (9) dadurch definiert ist, dass der erste Aktuator (12) und der zweite Aktuator (12') beide in der ersten Aktuierposition (A1) oder in der zweiten Aktuierposition (A2) sind, wobei eine dritte Stellposition (S3) des Stellelements (9) dadurch definiert ist, dass der eine von dem ersten und zweiten Aktuator (12, 12') in der zweiten Aktuierposition (A2) und der andere von dem ersten und zweiten Aktuator (12, 12') in der ersten Aktuierposition (A1) ist.

11. Schaltgetriebe nach einem der Ansprüche 1 bis 10,
**dadurch gekennzeichnet,**
**dass** zumindest einer von dem ersten und dem zweiten Aktuator (12, 12') in Form eines bistabilen Aktuators gestaltet ist derart, dass der Kolben (14, 14') bei Bestromen des Elektromagneten (13, 13') mit einer ersten Polarität in eine erste Aktuierposition (A1) überführt wird und bei Bestromen des Elektromagneten (13, 13') mit einer zweiten Polarität in eine zweite Aktuierposition (A2).

12. Schaltgetriebe nach einem der Ansprüche 1 bis 11,
**dadurch gekennzeichnet,**
**dass** die Kupplung (7) mittels der Aktuierungsanordnung (8) wahlweise in eine erste Kupplungsposition (C1) überführbar ist, in der Drehmoment über die erste Schaltstufe (5) von der Antriebswelle (3) auf die Abtriebswelle (4) übertragen wird, in eine Neutralposition (C0), in der die Antriebswelle (3) und die Abtriebswelle (4) frei gegeneinander drehbar sind, sowie
in eine zweite Kupplungsposition (C2), in der Drehmoment über die zweite Schaltstufe (6) von der Antriebswelle (3) auf die Abtriebswelle (4) übertragen wird.

13. Elektroantriebsanordnung für ein Kraftfahrzeug, umfassend:
eine elektrische Maschine (21) zum Antreiben des Kraftfahrzeugs,
ein von der elektrischen Maschine antreibbares Schaltgetriebe (2),
ein von dem Schaltgetriebe antreibbares Differentialgetriebe (22),
**dadurch gekennzeichnet,**
**dass** das Schaltgetriebe (2) nach einem der Ansprüche 1 bis 12 gestaltet ist,
wobei die Antriebswelle (3) des Schaltgetriebes mit der elektrischen Maschine (21) antriebsverbunden ist und die Abtriebswelle (4) des Schaltgetriebes (2) mit dem Differentialgetriebe (22) antriebsverbunden ist.

14. Verfahren zum Steuern des Schaltgetriebes nach einem der Ansprüche 1 bis 12,
**dadurch gekennzeichnet,**
**dass** der erste Aktuator (12) genau auf eine erste Aktuierposition (A1) und auf eine zweite Aktuierposition (A2) einstellbar ist und auf eine von der ersten Aktuierposition (A1) und der zweiten Aktuierposition (A2) des ersten Aktuators (12) eingestellt wird, und
**dass** der zweite Aktuator (12') genau auf eine erste Aktuierposition (A1) und auf eine zweite Aktuierposition (A2) einstellbar ist und auf eine von der ersten Aktuierposition (A1) und der zweiten Aktuierposition (A2) des zweiten Aktuators (12') eingestellt wird.

15. Verfahren nach Anspruch 14,
**dadurch gekennzeichnet, dass**
das Stellelement (9) in eine erste Stellposition (S1) überführt wird, indem der erste Aktuator (12) und der zweite Aktuator (12') jeweils auf die erste Aktuierposition (A1) eingestellt werden;
das Stellelement (9) in eine zweite Stellposition (S2) überführt wird, indem einer von dem ersten und zweiten Aktuator (12, 12') in die erste Aktuierposition (A1) und der andere von dem ersten und zweiten Aktuator (12', 12) auf die zweite Aktuierposition (A2) eingestellt wird; und
das Stellelement (9) in eine dritte Stellposition (S3) überführt wird, indem der
erste Aktuator (12) und der zweite Aktuator (12') jeweils auf die zweite Aktuierposition (A2) eingestellt werden.

16. Verfahren nach Anspruch 14,
**dadurch gekennzeichnet, dass**
das Stellelement (9) in eine erste Stellposition (S1) überführt wird, indem der eine von dem ersten und zweiten Aktuator (12, 12') in der ersten Aktuierposition (A1) und der andere von dem ersten und zweiten Aktuator (12', 12) in der zweiten Aktuierposition (A2) eingestellt wird;
das Stellelement (9) in eine zweite Stellposition (S2) überführt wird, indem der erste Aktuator (12) und der zweite Aktuator (12') beide auf die erste Aktuierposition (A1) oder die zweite Aktuierposition (A2) eingestellt werden;
das Stellelement (9) in eine dritte Stellposition (S3) überführt werden, indem der eine von dem ersten und zweiten Aktuator (12, 12') auf die zweite Aktuierposition (A2) und der andere von dem ersten und zweiten Aktuator (12', 12) auf die erste Aktuierposition (A1) eingestellt wird.

## Claims

1. Multi-step transmission, more particularly for use in the driveline of a motor vehicle, comprising:
an input shaft (3);
an output shaft (4);
a first transmission stage (5);
a second transmission stage (6);
a clutch (7) which can be transferred into three clutch positions (C1, C0, C2) and is configured to selectively drivingly connect the input shaft (3) and the output shaft (4) to each other via the first transmission stage (5) or the second transmission stage (6), or to disconnect the input shaft (3) and the output shaft (4) from each other,
an actuating assembly (8) for operating the clutch (7), wherein the actuating assembly (8) comprises a movable setting element (9) which is movable into three setting positions (S1, S2, S3) and which is connected to a movable clutch part (10) of the clutch (7),
**characterised in that** the actuating assembly (8) comprises a first electromagnetically operable actuator (12) and a second electromagnetically operable actuator (12') that are operable independently of each other into individual positions and that jointly act on the control element (9) such that the setting element (9) is transferrable according to the individual position of the first and the second actuator (12, 12') into the three setting positions (S1, S2, S3) by same.

2. Multi-step transmission (9) according to claim 1,
**characterised in**
**that** the setting element (9) comprises a first portion (15) which is connected to the first electromagnetically operable actuator (12) and a second portion (15') which is connected to the second electromagnetically operable actuator (12'), wherein the first portion (15) and the second portion (15') are arranged at a distance from one another, and
wherein a first line of force of the first actuator (12) extends through the first portion (15) and a second line of force of the second actuator (12') extends through the second portion (15').

3. Multi-step transmission according to claim 2,
**characterised in**
**that** the first line of force and the second line of force extend parallel to one another.

4. Multi-step transmission according to any one of claims 1 to 3,
**characterised in**
**that** the setting element (9) is provided in the form of a pivotable rocker which is pivotable around a pivot axis (X9), wherein the pivot axis (X9) is arranged between the first portion (15) and the second portion (15'), wherein the movable clutch part (10) is connected to the setting element (9) in particular in the region of the pivot axis (X9).

5. Multi-step transmission according to any one of claims 1 to 4,
**characterised in**
**that** the first and the second actuator (12, 12') each comprise an electromagnet (13, 13') and a piston (14, 14'), wherein the piston is displaceable when the electromagnet is actuated.

6. Multi-step transmission according to claim 5,
**characterised in**
**that** at least one of the first and the second actuator (12, 12') is configured in the form of a mono-stable actuator such that, when the electromagnet (13, 13') is supplied with current, the piston (14, 14') is force-loaded in a first direction (R1), and when the electromagnet (13, 13') is in a current-less condition, the piston is force-free wherein a returning spring (17, 17') is provided which loads the piston (14, 14') in an opposite second direction (R2).

7. Multi-step transmission according to any one of claims 5 or 6,
**characterised in**
**that** the first and the second actuator (12, 12') are arranged such that the pistons (14, 14') are loaded in the same direction (R1, R2) when the respective associated electromagnet (13, 13') is supplied with current.

8. Multi-step transmission according to any one of claims 1 to 7,
**characterised in**
**that** the first and the second actuator (12, 12') are each transferrable into a first actuating position (A1) and into a second actuating position (A2),
wherein a first setting position (S1) of the setting element (9) is defined in that the first actuator (12) and the second actuator (12') are each in the first actuating position (A1),
wherein the second setting position (S2) of the setting element (9) is defined in that one of the first and of the second actuator (12, 12') is in the first actuating position (A1) and the other one of the first and the second actuator (12', 12) is in the second actuating position (A2), and wherein a third setting position (S3) of the setting element (9) is defined in that the first actuator (12) and the second actuator (12') are each in the second actuating position (A2).

9. Multi-step transmission according to one of claims 5 or 6,
**characterised in**
**that** the first and the second actuator (12, 12') are arranged such that the pistons (14, 14') - when the respective associated electromagnets (13, 13') are supplied with current - are loaded in opposite directions (R1, R2).

10. Multi-step transmission according to any one of claims 1 to 6 or 9,
**characterised in**
**that** the first and the second actuator (12, 12') are each transferrable into a first actuating position (A1) and into a second actuating position (A2),
wherein a first setting position (S1) of the setting element (9) is defined in that one of the first and of the second actuator (12, 12') is in the first actuating position (A1) and the other one of the first and of the second actuator (12', 12) is in the second actuating position (A2),
wherein a second setting position (S2) of the setting element (9) is defined in that the first actuator (12) and the second actuator (12') are both in the first actuating position (A1) or in the second actuating position (A2), wherein a third setting position (S3) of the setting element (9) is defined in that one of the first and of the second actuator (12, 12') is in the second actuating position (A2) and the other one of the first and of the second actuator (12, 12') is in the first actuating position (A1).

11. Multi-step transmission according to any one of claims 1 to 10,
**characterised in**
**that** at least one of the first and of the second actuator (12, 12') is designed in the form of a bi-stable actuator such that the piston (14, 14') is transferred into a first actuating position (A1) when the electromagnet is supplied with current with a first polarity, and into a second actuating position (A2) when the electromagnet (13, 13') is supplied with current with a second polarity.

12. Multi-step transmission according to any one of claims 1 to 11,
**characterised in**
**that** by means of the actuation assembly (8), the clutch (7) is optionally transferrable into a first clutch position (C1) in which torque is transmitted via the first transmission stage (5) from the input shaft (3) to the output shaft (4), into a neutral position (C0) in which the driveshaft (3) and the output shaft (4) are freely rotatable relative to one another, and into a second clutch position (C2) in which torque is transmitted via the second transmission stage (6) from the driveshaft (3) to the output shaft (4).

13. Electric drive assembly for a motor vehicle, comprising:
an electric machine (21) for driving the motor vehicle,
a multi-step transmission drivable by the electric machine,
a differential drive (22) drivable by the multi-step transmission,
**characterised in**
**that** the multi-step transmission (2) is designed according to one of claims 1 to 12,
wherein the input shaft (3) of the multi-step transmission is drivingly connected to the electric machine (21), and the output shaft (4) of the multi-step transmission (2) is drivingly connected to the differential drive (22).

14. Method for controlling the multi-step transmission according to any one of claims 1 to 12,
**characterised in**
**that** the first actuator (12) is settable to exactly a first actuating position (A1) and to a second actuating position (A2) and is set to one of the first actuating position (A1) and the second actuating position (A2) of the first actuator (12), and
**that** the second actuator (12') is settable exactly to a first actuating position (A1) and to a second actuating position (A2) and is set to one of the first actuating position (A1) and the second actuating position (A2) of the second actuator (12').

15. Method according to claim 14,
**characterised in**
**that** the setting element (9) is transferred into a first setting position (S1) by setting the first actuator (12) and the second actuator (12') respectively to the first actuating position (A1);
**that** the setting element (9) is transferred into a second setting position (S2) by setting one of the first and of the second actuator (12, 12') to the first actuating position (A1) and the other one of the first and of the second actuator (12', 12) to the second actuating position (A2); and
**that** the setting element (9) is transferred into a third setting position (S3) by setting the first actuator (12) and the second actuator (12') respectively to the second actuating position (A2).

16. A method according to claim 14,
**characterised in**
**that** the setting element (9) is transferred into a first setting position (S1) by setting one of the first and of the second actuator (12, 12') to the first actuating position (A1) and the other one of the first and second actuator (12', 12) to the second actuating position (A2);
**that** the setting element (9) is transferred into a second setting position (S2) by setting both the first actuator (12) and the second actuator (12') to the first actuating position (A1) or to the second actuating position (A2);
**that** the setting element (9) is transferred into a third setting position (S3) by setting one of the first and the second actuator (12, 12') to the second actuating position (A2), and the other one of the first and the second actuator (12', 12) to the first actuating position (A1).

## Revendications

1. Boîte de vitesses manuelle, destinée en particulier à être utilisée dans une chaîne de transmission d'un véhicule, comprenant :
un arbre primaire (3) ;
un arbre secondaire (4) ;
un premier cran de vitesses (5) ;
un second cran de vitesses (6) ;
un embrayage (7) qui peut être mis dans trois positions d'embrayage (C1, C0, C2) et est conçu pour relier entre eux en entraînement ou découpler l'arbre primaire (3) et l'arbre secondaire (4) de manière sélective par le premier cran de vitesses (5) ou le second cran de vitesses (6),
un agencement d'actionnement (8) pour actionner l'embrayage (7), dans laquelle l'agencement d'actionnement (8) présente un élément de réglage mobile (9) qui est mobile dans trois positions de réglage (S1, S2, S3) et est relié à une partie d'embrayage (10) mobile de l'embrayage (7),
**caractérisée en ce que** l'agencement d'actionnement (8) présente un premier actionneur (12) à actionnement électromagnétique et un second actionneur (12') à actionnement électromagnétique qui peuvent être actionnés indépendamment l'un de l'autre dans des positions individuelles et qui agissent conjointement sur l'élément de réglage (9) de telle sorte qu'en fonction de la position individuelle des premier et second actionneurs (12, 12'), l'élément de réglage (9) peut passer dans les trois positions de réglage (S1, S2, S3).

2. Boîte de vitesses manuelle selon la revendication 1,
**caractérisée en ce que**
l'élément de réglage (9) comprend un premier tronçon (15) qui est relié au premier actionneur (12) à actionnement électromagnétique, et un second tronçon (15') qui est relié au second actionneur (12') à actionnement électromagnétique,
dans laquelle le premier tronçon (15) et le second tronçon (15') sont distants l'un de l'autre, et
dans laquelle une première ligne d'effet dynamique du premier actionneur (12) passe à travers le premier tronçon (15) et une seconde ligne d'effet dynamique du second actionneur (12') passe à travers le second tronçon (15').

3. Boîte de vitesses manuelle selon la revendication 2,
**caractérisée en ce que**
la première ligne d'effet dynamique et la seconde ligne d'effet dynamique sont parallèles entre elles.

4. Boîte de vitesses manuelle selon l'une des revendications 1 à 3,
**caractérisée en ce que**
l'élément de réglage (9) est conçu sous forme d'une bascule pivotante qui peut pivoter sur un pivot (X9), dans laquelle le pivot (X9) est disposé entre le premier tronçon (15) et le second tronçon (15'), dans laquelle la partie d'embrayage mobile (10) est reliée à l'élément de réglage (9) en particulier au niveau du pivot (X9).

5. Boîte de vitesses manuelle selon l'une des revendications 1 à 4,
**caractérisée en ce que** les premier et second actionneurs (12, 12') présentent respectivement un électroaimant (13, 13') et un piston (14, 14'), dans laquelle le piston peut être déplacé lorsque l'électroaimant est actionné.

6. Boîte de vitesses manuelle selon la revendication 5,
**caractérisée en ce qu'**
au moins un des premier et second actionneurs (12, 12') a la forme d'un actionneur monostable de façon à ce que le piston (14, 14') reçoive une force dans une première direction (R1) lorsque l'électroaimant (13, 13') reçoit du courant et soit sans force lorsque l'électroaimant (13, 13') est dans l'état sans courant, dans laquelle un ressort de rappel (17, 17') est prévu qui sollicite le piston (14, 14') dans un second sens opposé (R2).

7. Boîte de vitesses manuelle selon l'une des revendications 5 ou 6,
**caractérisée en ce que**
les premier et second actionneurs (12, 12') sont ainsi disposés que les pistons (14, 14') sont sollicités dans le même sens (R1, R2) lorsque l'électroaimant (13, 13') respectif correspondant reçoit du courant.

8. Boîte de vitesses manuelle selon l'une des revendications 1 à 7,
**caractérisée en ce que**
les premier et second actionneurs (12, 12') peuvent être mis respectivement dans une première position d'actionnement (A1) et une deuxième position d'actionnement (A2),
dans laquelle une première position de réglage (S1) de l'élément de réglage (9) est définie **en ce que** le premier actionneur (12) et le second actionneur (12') sont respectivement dans la première position d'actionnement (A1),
dans laquelle une deuxième position de réglage (S2) de l'élément de réglage (9) est définie **en ce qu'**un des premier et second actionneurs (12, 12') est dans la première position d'actionnement (A1) et l'autre des premier et second actionneurs (12, 12') est dans la deuxième position d'actionnement (A2), et
dans laquelle une troisième position de réglage (S3) de l'élément d'actionnement (9) est définie **en ce que** le premier actionneur (12) et le second actionneur (12') sont respectivement dans la deuxième position d'actionnement (A2).

9. Boîte de vitesses manuelle selon l'une des revendications 5 ou 6,
**caractérisée en ce que**
les premier et second actionneurs (12, 12') sont ainsi disposés que les pistons (14, 14') sont sollicités dans des sens opposés (R1, R2) lorsque l'électroaimant (13, 13') respectif correspondant reçoit du courant.

10. Boîte de vitesses manuelle selon l'une des revendications 1 à 6 ou 9,
**caractérisée en ce que**
les premier et second actionneurs (12, 12') peuvent être mis respectivement dans une première position d'actionnement (A1) et une deuxième position d'actionnement (A2),
dans laquelle une première position de réglage (S1) de l'élément de réglage (9) est définie **en ce que** l'un des premier et second actionneurs (12, 12') est dans la première position d'actionnement (A1) et l'autre des premier et second actionneurs (12, 12') est dans la deuxième position d'actionnement (A2),
dans laquelle une deuxième position de réglage (P2) de l'élément de réglage (9) est définie **en ce que** le premier actionneur (12) et le second actionneur (12') sont tous deux dans la première position d'actionnement (A1) ou dans la deuxième position d'actionnement (A2),
dans laquelle une troisième position de réglage (S3) de l'élément de réglage (9) est définie **en ce que** l'un des premier et second actionneurs (12, 12') est dans la deuxième position d'actionnement (A2) et l'autre des premier et second actionneurs (12, 12') est dans la première position d'actionnement (A1).

11. Boîte de vitesses manuelle selon l'une des revendications 1 à 10,
**caractérisée en ce qu'**
au moins un des premier et second actionneurs (12, 12') est sous forme d'un actionneur bistable de telle sorte que le piston (14, 14') passe dans une première d'actionnement (A1) lorsque l'électroaimant (13, 13') reçoit du courant avec une première polarité et passe dans une deuxième position d'actionnement (A2) lorsque l'électroaimant (13, 13') reçoit du courant avec une deuxième polarité.

12. Boîte de vitesses manuelle selon l'une des revendications 1 à 11,
**caractérisée en ce que**
l'embrayage (7) peut, au moyen de l'agencement d'actionnement (8), passer au choix dans une première position d'embrayage (C1), dans laquelle le couple est transmis de l'arbre primaire (3) à l'arbre secondaire (4) par le premier cran de vitesses (5), dans une position neutre (C0), dans laquelle l'arbre primaire (3) et l'arbre secondaire (4) sont rotatifs librement l'un contre l'autre, ainsi que
dans une deuxième position d'embrayage (C2), dans laquelle le couple est transmis de l'arbre primaire (3) à l'arbre secondaire (4) par le second cran de vitesses (6).

13. Agencement d'entraînement électrique pour un véhicule, comprenant :
une machine électrique (21) pour entraîner le véhicule,
une boîte de vitesses manuelle (2) pouvant être entraînée par la machine électrique,
un engrenage différentiel (22) pouvant être entraîné par la boîte de vitesses manuelle,
**caractérisé en ce que**
la boîte de vitesses manuelle (2) est conçue selon l'une des revendications 1 à 12, dans laquelle l'arbre d'entraînement (3) de la boîte de vitesses manuelle est relié en entraînement à la machine électrique (21) et l'arbre secondaire (4) de la boîte de vitesses manuelle (2) est relié en entraînement à l'engrenage différentiel (22).

14. Procédé de commande de la boîte de vitesses manuelle selon l'une des revendications 1 à 12,
**caractérisé en ce que**
le premier actionneur (12) peut être réglé précisément sur une première position d'actionnement (A1) et sur une deuxième position d'actionnement (A2) et est réglé sur une des première position d'actionnement (A1) et deuxième position d'actionnement (A2) du premier actionneur (12),
que le second actionneur (12') peut être réglé précisément sur une première position d'actionnement (A1) et sur une deuxième position d'actionnement (A2) et est réglé sur une des première position d'actionnement (A1) et deuxième position d'actionnement (A2) du second actionneur (12').

15. Procédé selon la revendication 14,
**caractérisé en ce que**
l'élément de réglage (9) est passé dans une première position de réglage (S1), **en ce que** le premier actionneur (12) et le deuxième actionneur (12') sont réglés respectivement sur la première position d'actionnement (A1) ;
l'élément de réglage (9) est passé dans une seconde position de réglage (S2), **en ce qu'**un des premier et second actionneurs (12, 12') est réglé dans la première position d'actionnement (A1) et l'autre des premier et second actionneurs (12, 12') est réglé sur la deuxième position d'actionnement (A2) ; et l'élément de réglage (9) est passé dans une troisième position de réglage (S3), **en ce que** le premier actionneur (12) et le deuxième actionneur (12') sont réglés respectivement sur la seconde position d'actionnement (A2).

16. Procédé selon la revendication 14,
**caractérisé en ce que**
l'élément de réglage (9) est passé dans une première position de réglage (S1), **en ce que** l'un des premier et second actionneurs (12, 12') est réglé dans la première position d'actionnement (A1) et l'autre des premier et second actionneurs (12, 12') est réglé sur la deuxième position d'actionnement (A2) ; l'élément de réglage (9) est passé dans une seconde position de réglage (S2), **en ce que** le premier actionneur (12) et le deuxième actionneur (12') sont réglés tous deux sur la première position d'actionnement (A1) ou la deuxième position d'actionnement (A2) ;
que l'élément de réglage (9) est passé dans une troisième position de réglage (S3), en ce **en ce que** l'un des premier et second actionneurs (12, 12') est réglé sur la deuxième position d'actionnement (A2) et l'autre des premier et second actionneurs (12', 12) est réglé sur la première position d'actionnement (A1) .
